# EUROPEAN PATENT APPLICATION

(11) **EP 2 408 041 A2**
(43) Date of publication of application: **18.01.2012**
(21) Application number: 11173417.4
(22) Date of filing: 11.07.2011
(51) Int. Cl.: H01M 2/10, H01M 10/04

(54) **Battery pack**

(30) Priority: 12.07.2010 KR 20100066861
(71) Applicant: Samsung SDI Co., Ltd., Yongin-si, Gyeonggi-do (KR)
(72) Inventor: Yoo, Martin, Cheonan-si, Chungcheongnam-do (KR); Hong, Jin-Tae, Cheonan-si, Chungcheongnam-do (KR)
(74) Representative: Salou, Clarisse

(57) **Abstract**

An embodiment of the present invention relates to a battery pack (100) including a plurality of bare cells (10), each having a cap assembly, a bottom positioned opposite to the cap assembly, and a side connecting the cap assembly and the bottom; a protection circuit module mounted on the bare cells; a cover frame (200) covering the bare cells, preferably composed of a first frame (210) and two second frames (220a, 220b); and an enclosure member (400) covering the bare cells.

## Description

### Field of the Invention

The present invention relates to a battery pack to be used in portable electronic devices. Said battery pack is manufactured at a low manufacturing cost by simplifying its structure with respect to the battery packs of the prior art. The present invention also relates to a thin electronic device, preferably a laptop computer, comprising said battery pack.

### Discussion of Related Art

In general, a battery pack comprising a plurality of (i.e. at least two) built-in bare cells is used as a power supplier of portable electronic devices. The external appearance of the battery pack depends usually on the electronic device to be equipped with the battery pack.

As weight and thickness of portable electronic devices reduce, battery packs implemented in the electronic devices are required to become lighter and smaller. Further, the battery packs are required to be more stable against a fall and/or an external shock.

### SUMMARY OF THE INVENTION

One object of the present invention is a small-sized and thin battery pack equipped with a plurality of built-in bare cells.

Further, another object of the present invention is a battery pack that is electrically stable without changing the internal structure of the battery pack.

Further, another object of the present invention is a battery pack of which the external shape may be easily changed in accordance with the structure of the electronic devices using the battery pack.

An object of the present invention is a battery pack described as follows.

An aspect of the present invention provides a battery pack including a plurality of bare cells, each one of the bare cells having a cap assembly, a bottom disposed opposite to the cap assembly, and a side connecting the cap assembly and the bottom; a protection circuit module mounted on the bare cells; a cover frame covering at least one side of the bare cells.; and an enclosure member covering the bare cells. The bare cells are preferably cylindrical bare cell or rectangular bare cells.

The cover frame is generally composed of a first frame and two second frames. The second frames of the cover frame may respectively extend from both ends of the first frame. In this configuration, preferably the first frame covers one side of at least one of the bare cells and one of the second frames covers the cap assembly of at least one of the bare cells and the other one of the second frames covers the bottom of at least another one of the bare cells.
Further, the first frame has preferably a seat having a shape corresponding to the shape of at least one side of at least one of the bare cells, preferably of at least one side of the bare cells (as an assembly). This allows the seat to be physically in contact with at least one side of at least one of the bare cells. The first frame further may further comprise a receiving portion, that is preferably a groove, for receiving the protection circuit module. Thus the position of the receiving portion corresponding to the position of the protection circuit module disposed on the bare cells in the battery pack.
Further, the second frames may have fixing portions having shapes corresponding respectively to at least one cap assembly of at least one of the bare cells and to at least one bottom of at least another one of the bare cells. This allows the fixing of the bare cells to the cover frame. The second frames may be linearly connected to and extending from two ends of the first frame, and preferably the second frames are able to rotate at ±90° with respect to the first frame.

The cover frame may be made of thermoplastic resin. The cover frame may also be made of anyone or more of glass fiber and glass fiber reinforced plastics. Thus the cover frame can be made of any element chosen from the group consisting of thermoplastic resins, glass fiber and glass fiber reinforced plastics.
The enclosure member may be made of polycarbonate. The enclosure member may further comprise an adhesive layer on a surface in contact with the bare cells. Preferably, said adhesive layer is disposed on an inner surface of the enclosure member with said inner surface being in physical contact with the bare cells.

The enclosure member usually covers the bare cells exposed by the cover frame (that is to say not covered by the cover frame) and potentially a portion of the cover frame. This portion of the cover frame is the portion physically contacting the bare cells.

The battery pack may further include a spacer disposed in a space between the bare cells and the enclosure member, preferably such that the surface of the enclosure member and the surface of the first frame which are in physical contact one with each other are parallel one to the other. The spacer may be an organic or an inorganic insulator, and the spacer is preferably made of any one or more of polyethylene, polypropylene, polyethersulfone, polyphenyleneoxide, polyphenylene sulfide, polyimide, and polyethylene terephtalate.
The cover frame may have a protrusion extruding outside of the battery pack, and the protrusion preferably corresponds to a location of the protection circuit module. The protection circuit module may have an external terminal, said external terminal being electrically connected outside of the battery pack through a terminal leading unit disposed on the protrusion.

Fastening structures may be formed at two opposite sides of the cover frame. They allow to combine the battery pack to an electronic device equipped with said battery pack.

The bare cells may be cylindrical or rectangular bare cells.

The battery pack of the invention is preferably used in a thin electronic device, preferably a laptop computer. That is to say the thin electronic device such as the laptop computer comprises the battery pack according to the invention. Advantageously, according to the invention, the battery pack of the present invention may be reduced in size and weight by covering only a portion of the bare cells.

Further, the configuration of the cover pack of the battery pack of the present invention is advantageously simplified. Therefore, the external shape of the battery pack may be implemented in various ways in accordance with an electronic device equipped with the battery pack.

Further, the battery pack of the present invention may include fixing portions that fix the cap assembly and the bottom of each one of the bare cells. Therefore, the bare cells may advantageously be firmly fixed in the battery pack.

Further, the cover frame of the battery pack of the present invention can have a groove for receiving the protection circuit module. Therefore, it is possible in this case to achieve a slim battery pack by seating the protection circuit module mounted on the bare cells inside the cover frame. This is one of the advantages of the present invention.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, wherein:

FIG. 1 is a schematic exploded oblique view showing a battery pack constructed as a first embodiment of the present invention;

FIG. 2 is a schematic oblique view of a cylindrical bare cell accommodated in a battery pack constructed as the first embodiment of the present invention;

FIG. 3 is a schematic oblique view showing a cover frame constructed as the first embodiment of the present invention;

FIG. 4 is a schematic plan view showing the top of a connecting structure of a first frame and a second frame of the cover frame constructed as the first embodiment of the present invention;

FIG. 5 is a schematic view showing the top of an assembly of the cover frame and a bare cell constructed as the first embodiment of the present invention;

FIG. 6A is a schematic oblique view showing an assembly of bare cells and a spacer constructed as the first embodiment of the present invention;

FIG. 6B is a schematic side view of FIG. 6A;

FIG. 7 is a schematic exploded oblique view showing a battery pack constructed as the first embodiment of the present invention;

FIG. 8 is a schematic oblique view showing a battery pack constructed as the first embodiment of the present invention;

FIG. 9A is a schematic view showing when a battery pack constructed as the first embodiment of the present invention is mounted in the rear side of a first laptop computer;

FIG. 9B is a schematic enlarged cross-sectional view of FIG. 9A;

FIG. 10 is a schematic oblique view of the first laptop computer of FIG. 9A and 9B;

FIG. 11 is a schematic exploded oblique view showing a battery pack constructed as a second embodiment of the present invention;

FIG. 12 is a schematic oblique view of a rectangular bare cell of the battery pack constructed as the second embodiment of the present invention;

FIG. 13 is a schematic oblique view showing the cover frame of the battery pack constructed as the second embodiment of the present invention;

FIG. 14 is a schematic plan view showing the top of a connecting structure of a first frame and a second frame of the cover frame of the battery pack constructed as the second embodiment of the present invention;

FIG. 15 is a schematic plan view showing the top of an assembly of the bare cells and the cover frame of the battery pack constructed as the second embodiment of the present invention;

FIG. 16A is a schematic oblique view showing an assembly of the bare cells and a spacer of the battery pack constructed as the second embodiment of the present invention;

FIG. 16B is a schematic side view of FIG. 16A;

FIG. 17 is a schematic oblique view showing a battery pack constructed as the second embodiment of the present invention;

FIG. 18 is a schematic oblique view showing a battery pack constructed as the second embodiment of the present invention;

FIG. 19 is a schematic view showing when a battery pack constructed as the second embodiment of the present invention is mounted in the rear side of a second laptop computer; and

FIG. 20 is a schematic oblique view showing the second laptop computer equipped with a battery pack constructed as the second embodiment of the present invention.

### DETAILED DESCRIPTION OF THE INVENTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive.
In addition, when an element is referred to as being "on" another element, it may be directly on the another element or be indirectly on the another element with one or more intervening elements interposed therebetween. Also, when an element is referred to as being "connected to" another element, it may be directly connected to the another element or be indirectly connected to the another element with one or more intervening elements interposed therebetween. Hereinafter, like reference numerals refer to like elements.

Embodiments of the present invention and other information for those skilled in the art to easily understand the present invention are described hereafter in detail with the accompanying drawings. It can be understood by those skilled in the art that the embodiments described below are just exemplified.

Detailed descriptions for well-known technologies were omitted, in explaining the present invention. In addition, the size or thickness may be exaggerated or reduced in the drawings for the convenience of description and clarity, and may be different from the thickness or size of the actual layers

The configuration and operation of embodiments constructed as the present invention are described hereafter in detail with reference to the accompanying drawings.

Two battery packs constructed as the first and second embodiments of the present invention, and their respective use in respectively a first and a second laptop are described hereafter with reference to the accompanying drawings. Said battery packs are thin light battery packs.

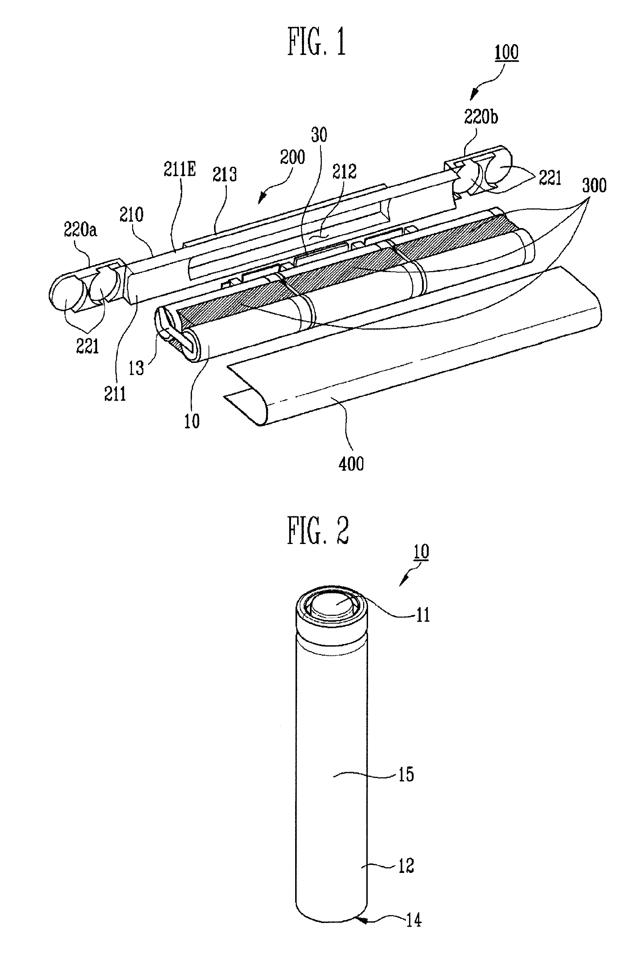

FIGS. 1 through 8 are views showing a battery pack 100 in accordance with a first embodiment of the present invention.

FIG. 1 is an exploded view showing the battery pack 100 constructed as an exemplary first embodiment of the present invention.

Referring to FIG. 1, the battery pack 100 includes a plurality of cylindrical bare cells 10, a protection circuit module 30, a cover frame 200, a spacer 300, and an enclosure member 400. That is, the battery pack 100 includes the bare cells 10, the protection circuit module 30 mounted on the bare cells 10 it is electrically connected with, the cover frame 200 covering the joint between the bare cells 10 and the protection circuit module 30, the enclosure member 400 covering the bare cells 10, and the spacer 300 disposed in a space between the bare cells 10 and the enclosure member 400. The plurality of the bare cells is here after called "bare cells".

FIG. 2 shows schematically one of the cylindrical bare cells 10 that is accommodated in the battery pack 100 according to this first embodiment.

Referring to FIG. 2, the bare cells 10 that are accommodated in the battery pack 100 have individually a cylindrical shape. Each one of the bare cells 10 is composed of a can 12 having an opening and a cap assembly 11 closing the opening of the can 12. Further, the bottom 14 is positioned opposite to the opening of the can 12 and a side 15 of cylindrical shape of the can 12 is disposed between them. Though not shown, an electrode assembly and an electrolyte are accommodated in the can 12. The electrode assembly is formed by winding an anode plate, a cathode plate, and a separator interposed between the electrode plates. The anode plate and the cathode plate each having an electrode tap and the electrode taps may be connected with the can 12 and the cap assembly 11. Therefore, electric energy produced by chemical reaction between the electrode plates and the electrolyte is transmitted to the outside by the electrode taps. One or more of the bare cells 10 having the above configuration may be connected in a battery pack. The number and connection type of the bare cells 10 may be modified in accordance with different designs of the battery pack. Six cylindrical bare cells 10 are shown in FIG. 1 as an example of a battery pack in which six cylindrical bare cells are connected in parallel. In FIG. 1, three of the six bare cells 10 are connected in a series and two such series of bare cells are connected in parallel. That is, the bare cells 10 are arranged in 3S2P.

Referring to FIG. 1, the protection circuit module 30 mounted on the bare cells 10 is disposed at one side of at least one of the bare cells 10 when the plurality of the bare cells 10 are mounted. The protection circuit module 30 prevents the bare cells 10 from being overcharged or overdischarged by controlling voltage and current when the bare cells 10 are charged or discharged. Therefore, the protection circuit module 30 may include a protection device controlling voltage or current of the bare cells 10 and/or at least one mounted component, such as an external terminal. In this first embodiment, the protection circuit module 30 comprises an external terminal (not shown). The external terminal may be exposed to the outside through the cover frame 200 and thus the bare cells 10 may be electrically connected to the outside by the external terminal exposed to the outside. Further, the protection circuit module 30 may further include a conductive pattern on its external terminal, on one side or two of its sides, in order to electrically connect the mounted components.

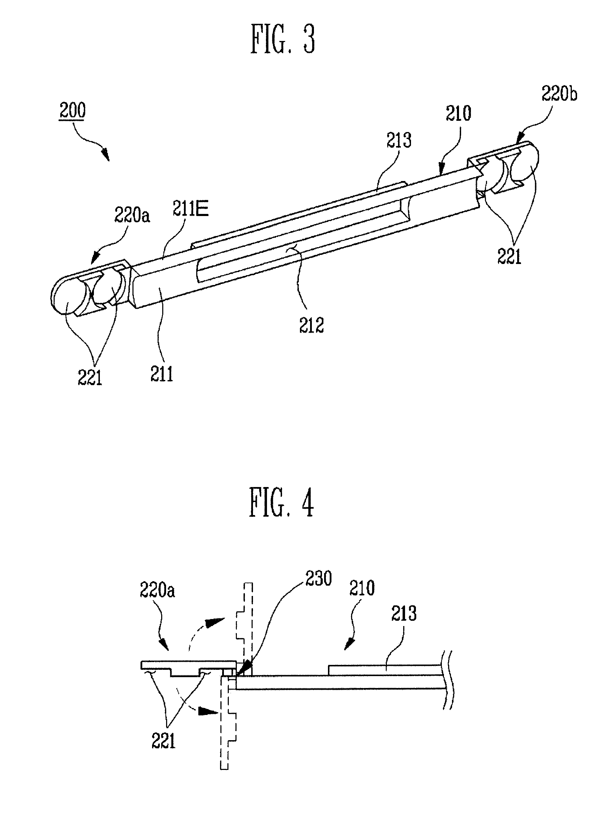

FIG. 3 is an oblique view showing the cover frame 200 of the battery pack 100 constructed as this first embodiment.

Referring to FIG. 3, the cover frame 200 has frames 210, 220a, and 220b covering at least one side of at least one of the bare cells 10. Further, the cover frame 200 advantageously protects the bare cells 10 against any external shock. The cover frame 200 is open at one side and composed of a first frame 210 and two second frames 220a, 220b. The first frame 210 is a longer part of the cover frame 200, covering a portion of the sides 15 of some of the bare cells 10. The second frames 220a, 220b are shorter parts of the cover frame 200 than the first frame 210. The second frames 220a, 220b respectively extend from both ends of the first frame 210 and can respectively cover one or more of the cap assemblies 11 of the bare cells 10 and one or more of the bottoms 14 of the cans 12. To do so, they are bolded at an angle of 90° for the assembly of the battery pack as shown in the Figures. The second frames 220a, 220b may be integrally and simultaneously formed as a single body with the first frame 210, as shown, or may be separably formed and then connected to the first frame 210.

The first frame 210 comprises a bare cell seat 211 in its inside part. The bare cell seat 211 is the portion facing the portion of the sides of the bare cells 10. That is, the seat 211 is to be in physical contact with this portion of the sides 15 of the bare cells 10, when the cover frame 200 is mounted on the bare cells 10. In the first embodiment, when the cover frame 200 is mounted on the bare cells 10, the seat 211 is in direct physical contact with this portion of the sides 15 of the bare cells 10. Therefore the seat 211 has a shape corresponding to the shape of this portion of the sides 15 of the bare cells 10. In this first embodiment, each one of the bare cells 10 has a cylindrical shape and the seat 211 is curved to correspond to the cylindrical shape of this portion of the sides 15 of the bare cells 10.

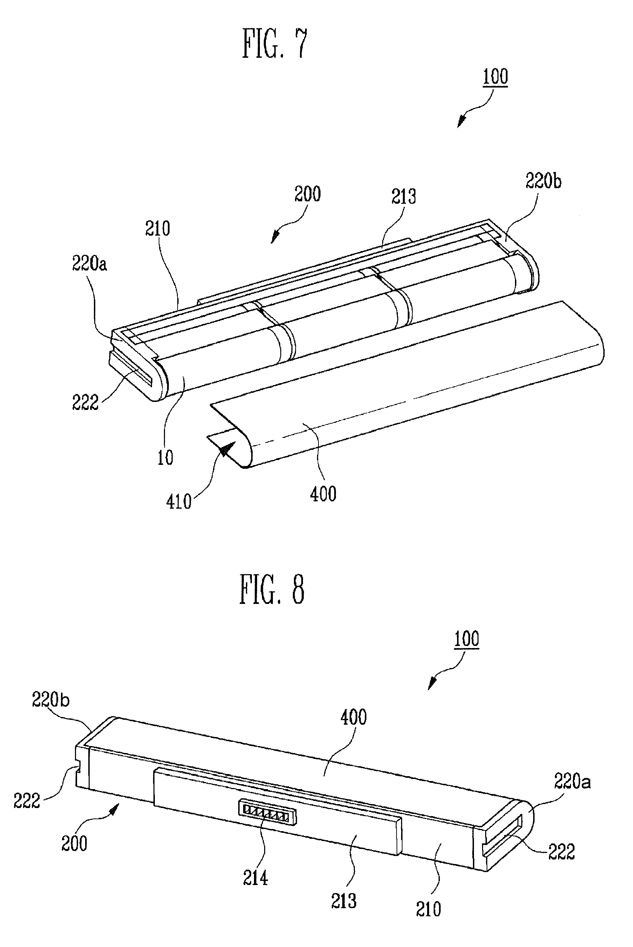

Further, the first frame 210 may further have a protection circuit module receiving portion 212 therein. The receiving portion 212 is a groove corresponding to the protection circuit module 30, and receives the protection circuit module 30 when it is mounted. The protection circuit module 30 has an external terminal and the external terminal is electrically connected with the outside through a leading unit 214 (shown in Figure 8). This is described below.

Referring to FIG. 1, the protection circuit module 30 is disposed at a portion of the sides 15 of the bare cells 10. As shown in the Figures, when the protection circuit module 30 is disposed at the joint of the bare cells 10 and the cover frame 200, the cover frame 200 can interfere with the protection circuit module 30. The interference is advantageously prevented by forming the groove-shaped receiving portion 212 on the first frame 210 of the cover frame 200 to receive the protection circuit module 30. The first frame 210 of the cover frame 200 is the portion contacting the protection circuit module 30 mounted on the bare cells 10. Therefore, since the protection circuit module 30 is received in the receiving portion 212, the bare cells are in a good physical contact with the seat 211 of the first frame 210. The position of the protection circuit module 30 in the bare cells 10 may be modified in various ways according to the invention. Further, although the receiving portion 212 shown in the figures is a rectangular groove, the shape is not limited thereto as long as the receiving portion 212 does not damage the protection circuit module 30.

The second frames 220a and 220b of the cover frame 200 are the portions covering the bottoms 14 and the cap assemblies 11 of some of the cans 12 of the bare cells 10.

The second frames 220a and 220b respectively extend from both ends of the first frame 210 and respectively cover at least one bottom and at least one cap assembly of at least one of the bare cells 10. Thus the second frames 220a and 220b are two pieces covering a portion of the cap assembly and the bottom of the cylindrical bare cells 10. Bare cell fixing portions 221 are formed inside each one of the second frames 220a and 220b. The fixing portions 221 are two circular grooves. The grooves have shapes corresponding to the cap assembly and the bottom of the bare cells 10. The fixing portions 221 fix some of the cap assemblies and the bottoms of some of the bare cells 10 while reinforcing the combination of the cover frame 200 and the bare cells 10. The shape and number of the fixing portions 221 depend on the shape, number, and connection type of the bare cells 10 received inside the cover frame 200, and are not limited to those shown in the Figures. For example, when the cap assembly and the bottom of the bare cells 10 are rectangles, the fixing portions 221 may be rectangles corresponding to the shapes of the cap assemblies and the bottoms of the bare cells 10. Further, when three series of the bare cells 10 are connected in parallel (not shown), the fixing portion of the second frame may have three grooves each corresponding to each series of the bare cells 10.

FIG. 4 is a schematic plan view showing the top of a connecting structure of the first frame 210a and the second frame 220a of the cover frame 220.

Referring to FIG. 4, the second frame 220a extends from the first frame 210, but is not fixed. That is, the second frame 220a is linearly connected to the first frame 210 by a bending portion 230. The second frame may rotate at 90° to the left and right from the first frame 210 by the bending portion 230. Therefore, the bare cells 10 are easily fixed to the second frames 220a and 220b, after being seated on said first frame 210. Further, the bending portion 230 may be implemented by a hinge (not shown). That is, when the cover frame 200 is made of a material that is difficult to machine, such as wood, using a hinge for connection may be useful.

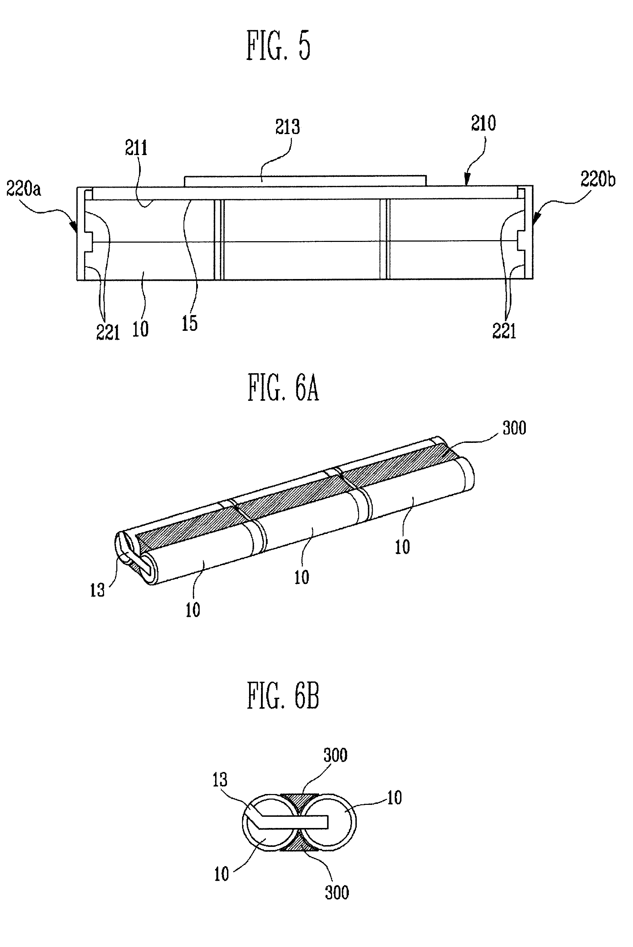

FIG. 5 shows schematically the top of an assembly of bare cells 10 and a cover frame 200.

That is, referring to FIG. 5, the sides 15 of three of the bare cells 10 are in physical contact with the first frame 210 of the cover frame 200, and the cap assembly and the bottom of some of the bare cells 10 are fixed by the second frame 220a and 220b of the cover frame 200. Therefore, the protection circuit module 30 disposed at the side of the bare cells 10 is received in the protection circuit module receiving portion 212 of the first frame 210 and the seat 211 of the first frame 210 is fitted on a side of the bare cells 10. Further, the fixing portions 221 of the second frames 220a and 220b fix the bare cells 10, covering the cap assembly and the bottom of some of the bare cells 10. Therefore, the bare cells 10 are firmly fixed to the cover frame 200 without being able to move inside the cover frame 200. Thus, the battery pack 100 is mechanically and electrically stable.

The cover frame 200 having the first and second frames 210, 220a and 220b may be manufactured by injection molding. The cover frame 200 may be made of thermoplastic resin. For example, the cover frame may be made of any one or more of glass fiber and glass fiber reinforced plastics (formed by adding plastic reinforcement to the glass fiber), but is not limited thereto.

FIG. 6A is an oblique view showing the assembly of the bare cells 10 and the spacer 300, and FIG. 6B is a side view of FIG. 6A.

Referring to FIGS. 6A and 6B, the bare cells 10 are connected in parallel by an electrode lead 13 and the space between the bare cells 10 is filled with the spacer 300. The spacer 300 has two parts, respectively, disposed on the top and the bottom of the bare cells 10 before the bare cells 10 are covered with the enclosure member 400 (see FIG. 1). The spacer 300 may be disposed before or after the bare cells 10 are received inside the cover frame 200. That is, the battery pack 100 according to this embodiment may further include the spacer 300 in the space between the bare cells 10 and the enclosure member 400 (see FIG. 1) such that the surfaces where the enclosure member 400 (see FIG. 1) and the first frame 210 are in contact are parallel.

In detail, the shape of the battery pack 100 according to this first embodiment depends on the type of electronic device equipped with the battery pack 100. In general, the battery pack 100 has a flat surface that contacts said electronic device. However, the battery pack 100 according to this first embodiment includes the cover frame 200 covering only one side of the cylindrical bare cells 10 therein and the enclosure member 400 covering the other portions of the sides of the assembly of the bare cells 10 (see FIG. 1). Further, even though the enclosure member 400 is generally made of a thin film, which is described below, the cylindrical bare cell 10 is not fully covered by the enclosure member 400, and the spacer 300 fills the voids. That is, one bare cell 10 and another bare cell 10 in parallel are connected with a flat surface by filling the spacer 300 into the space disposed between them.

The spacer 300 may be an electrical insulator that may be made of an organic material or an inorganic material. Preferably, the spacer 300 may be made of any one or more of PE (polyethylene), PP (polypropylene), PES (polyethersulfone), PPO (polyphenyleneoxide), PSS (polyphenylene sulfide), PI (polyimide), and PET (polyethylene terephthalate).

FIG. 7 is a schematic oblique view of the battery pack 100 according to this first embodiment.

Referring to FIG. 7, the enclosure member 400 covers the exposed portions of the sides of the bare cells 10 not covered by the cover frame 200. The enclosure member 400 may cover only the bare cells 10, or alternatively, as shown, may cover the bare cells 10 and at least a part of the cover frame 200 receiving the bare cells 10. In any case, the bare cells 10 are shielded against the outside by the enclosure member 400. Meanwhile, when the enclosure member 400 by its internal surface 410 covers a portion of the first frame 210, particularly the external surface 211 E of the seat 211 (see Figure 1), the connection force between the bare cells 10 and the cover frame 200 is advantageously increased.

Further, the enclosure member 400 is preferably an electrical insulating thin film. Therefore, as shown in FIG. 6, since the spacer 300 is disposed in the space between the bare cells 10 connected in parallel, the battery pack 100 has a flat external shape which hides the actual shape of the secondary battery 10 in the battery pack 100.

The enclosure member 400 may be generally made of synthetic resin, and for example, PC (polycarbonate) may be used, but it is not limitative. Further, an adhesive layer (not shown) may further provided inside the enclosure member 400, i.e., on the inner surface contacting the bare cells 10. The connection force between the enclosure 400 and the bare cells 10 is further increased by this adhesive layer.

FIG. 8 is a schematic oblique view of the battery pack 100 according to this first embodiment.

The battery pack 100 constructed as this first embodiment includes the cover frame 200 having the first and second frames 210, 220a, 220b, and the enclosure member 400 covering the bare cells 10 and a portion of the cover frame 200.

The first frame 210 of the cover frame 200 has the protection circuit module receiving portion 212 (see FIG. 3) therein. The first frame 210 comprises a corresponding protrusion 213 protruding outward formed at a position corresponding to the receiving portion 212 and a terminal leading unit 214 is formed on this protrusion 213.

As described above, the protrusion 213 is formed to correspond to where the protection circuit module 212 is received inside the first frame 210. That is, the protrusion 213 protrudes outward from the first frame 210 as much as the portion of the protection circuit module that exceeds the thickness of the first frame. Another possibility (not shown) is to reduce the thickness of the first frame 210 at this location. In this configuration, the protrusion 213 could be omitted, if the thickness of the first frame alone is large enough to include the whole protection circuit module 30 without protusion.

Further, the terminal leading unit 214 is herein formed at the center of the protrusion 213.

The external terminal (not shown) formed at the protection circuit module 30 (see FIG. 1) on the side of the bare cells 10 may be exposed by the terminal leading unit 214. The external terminal may be electrically connected with an electrical terminal of an electronic device equipped with the battery pack 100. In another embodiment (not shown), the terminal leading unit 214 may also be formed at other positions on the cover frame 200 in accordance with the structure of the battery pack 100. Further, the terminal leading unit 214, as shown in the figures, may protrude, but is not limited thereto.

Fastening structures 222 may be further formed on the sides of the cover frame 200, that is, the outer sides of the second frame 220. The fastening structure 222 is formed to fasten the battery pack 100 to an electronic device equipped with the battery pack 100.

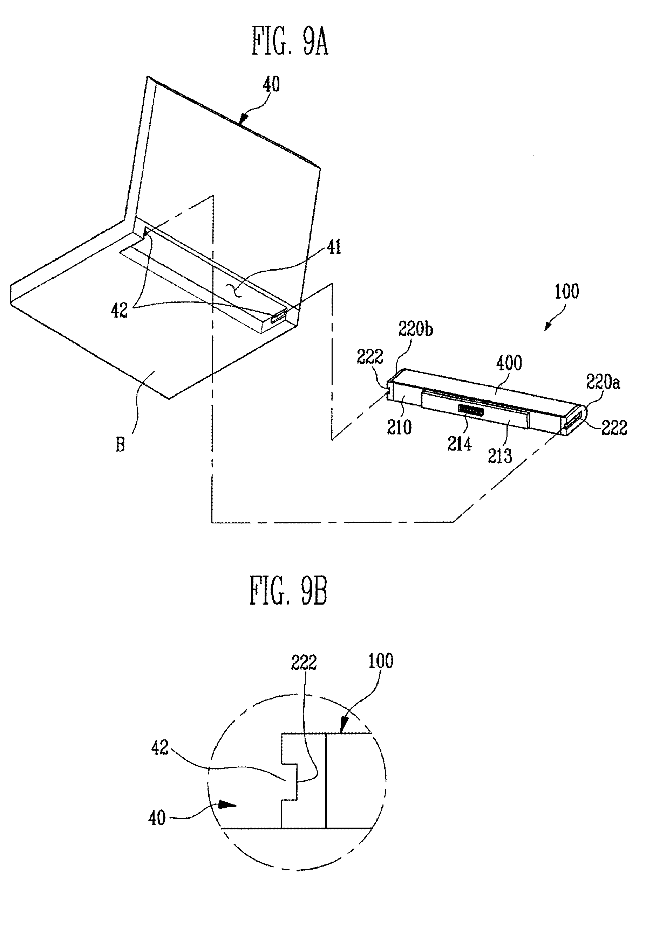

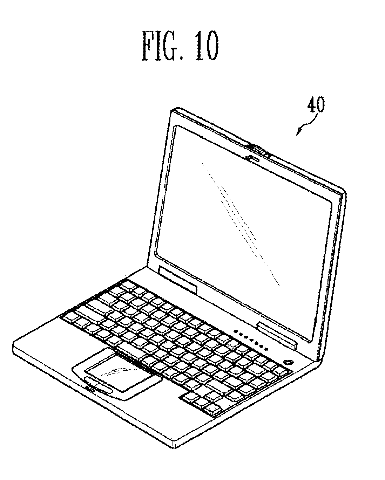

FIG. 9A shows when the battery pack 100 according to the first embodiment of the present invention is mounted in the rear side of a first laptop computer 40 and FIG. 9B is an enlarged cross-sectional view, when a fastening structure of the battery according to an embodiment of the present invention is fastened to the laptop computer. Further, FIG. 10 is an oblique view of said laptop computer 40 equipped with the battery pack 100.

Referring to FIGS. 9A and 9B, a power supply seat 41, where the battery pack 100 is mounted, is formed on the bottom B of the laptop computer 40. Fastening protrusions 42 are formed on both sides inside the power supply seat 41. As shown, the fastening structures 222 are long grooves corresponding to the fastening protrusions 42 of the seat 41. Further, the fastening structures 222 are positioned to the corresponding fastening protrusions 42 and fit to them. That is, as shown in FIG. 9B, the battery pack 100 is firmly fixed in the laptop computer 40 by the combination of the fastening structures 222 and the fastening protrusions 42.

The battery pack 100 is mounted in the laptop computer 40 by the fastening structures 222 of the battery pack 100 and the terminal leading unit 214 of the battery pack 100 is connected with the terminal (not shown) in the seat 41 for the battery pack 100 in the laptop computer 40. Therefore, it is possible to operate the laptop computer 40 by supplying it with the battery pack 100. On the other hand, the battery pack 100 of this first embodiment may also be used for various external electronic devices, other than the laptop computer 40, and is not limited by the above description.

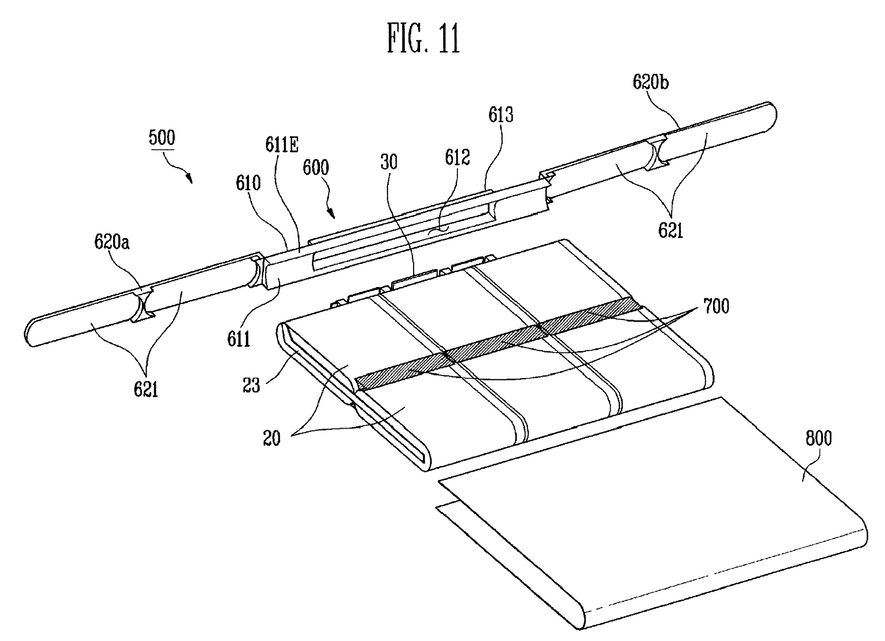

FIGS. 11 through 20 are views showing a battery pack constructed as a second embodiment of the present invention.

FIG. 11 is a schematic exploded view showing a battery pack 500 according to the second embodiment of the present invention.

Referring to FIG. 11, the battery pack 500 includes a plurality of rectangular bare cells 20, a protection circuit module 30, a cover frame 600, a spacer 700, and an enclosure member 800. That is, the battery pack 500 includes the bare cells 20, the protection circuit module 30 mounted on the bare cells 20 it is electrically connected with, the cover frame 600 covering the joint between the bare cells 20 and the protection circuit module 30, the enclosure member 800 covering the bare cells 20, and the spacer 700 disposed in a space between the bare cells 20 and the enclosure member 800. The plurality of the bare cells is here after called "bare cells".

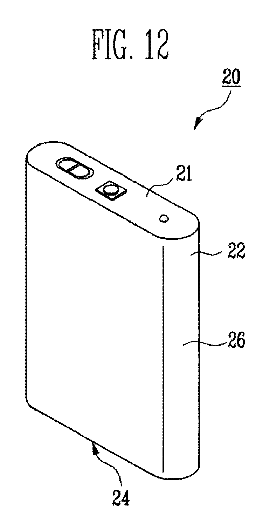

FIG. 12 shows schematically one of the rectangular bare cells 20 that is accommodated in the battery pack 500 according to this second embodiment.

Referring to FIG. 12, the bare cells 20 that are accommodated in the battery pack 500 have individually a rectangular shape. Each one of the bare cells 20 is composed of a can 22 having an opening and a cap assembly 21 closing the opening of the can 22. Further, the bottom 24 is positioned opposite to the opening of the can 22 and a side 26 of the can 22 is disposed between them. The side 26 includes two opposite flat major surfaces and two opposite curved minor surfaces. Though not shown, an electrode assembly and an electrolyte are accommodated in the can 22. The electrode assembly is formed by winding an anode plate, a cathode plate, and a separator interposed between the electrode plates. The anode plate and the cathode plate each having an electrode tap and the electrode taps are connected with the can 22 and the cap assembly 21. Therefore, electric energy produced by chemical reaction between the electrode plates and the electrolyte is transmitted to the outside by the electrode taps. One or more of the bare cells 20 having the above configuration are connected to the battery pack. Six rectangular bare cells 20 are shown in FIG. 11. The six bare cells 20 are arrange in 3S2P.

Referring to FIG. 11, the protection circuit module 30 mounted on the bare cells 20 is disposed at one side of at least one of the bare cells 20 when the plurality of the bare cells 20 are mounted. The protection circuit module 30 prevents the bare cells 20 from being overcharged or overdischarged by controlling voltage and current when the bare cells 20 are charged/discharged. Therefore, the protection circuit module 30 may be equipped with an external terminal (not shown). The external terminal is electrically connected with the outside by the cover frame 600. The configuration and operation of the bare cells 20 and the protection circuit module 30, other than those described above, are the same as in the first embodiment shown in FIG. 1, and the detailed description is not provided.

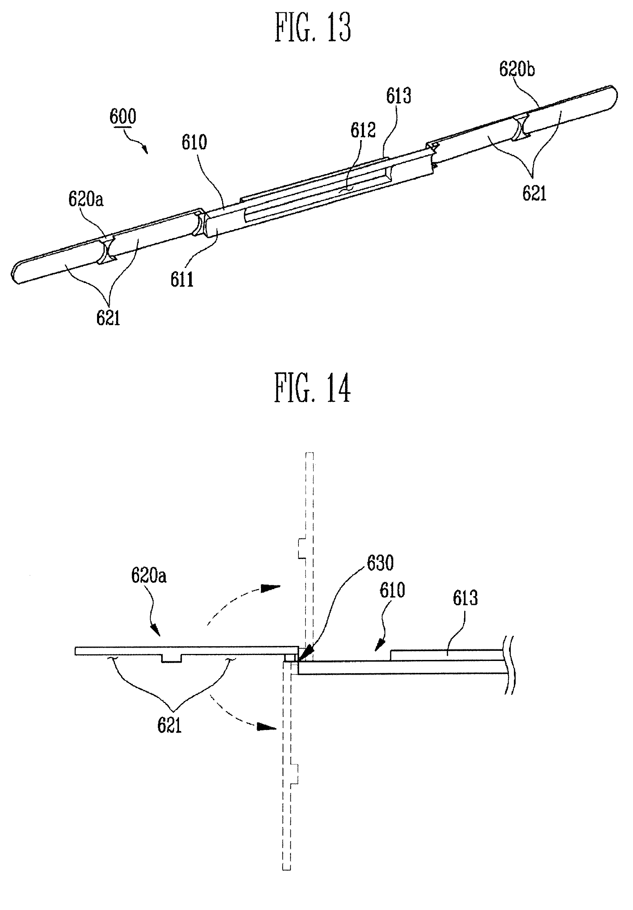

FIG. 13 is a schematic oblique view showing the cover frame 600 of the battery pack 500 according to this second embodiment.

Referring to FIG. 13, the cover frame 600 constructed as this embodiment has frames 610, 620a and 620b covering at least one side of at least one of the bare cells 20. Further, the cover frame 600 advantageously protects the bare cells 20 against any external shock. The cover frame 600 is open at one side. The cover frame 600 is composed of the first frame 610, that is a longer part, and two second frames 620a, 620b, that are shorter parts. The second frames 620a, 620b respectively extend from both ends of the first frame 610. The second frames 620a, 620b may be integrally and simultaneously formed with the first frame 610 as a single body, as shown, or alternatively, may be separably formed and then connected to the first frame 610.

As shown, the cover frame 600, as shown in the Figures, may cover the top, the bottom , or one side 26 of at least one of the bare cells 20. The inner surface of the first frame 610 is curved and covers a portion of at least one side, bottom or top of at least one of the bare cells 20. In one embodiment, the first frame 610 covers at least a portion of the side 26 of at least one of the bare cells.

The first frame 610 comprises a bare cell seat 611 in its inside part. The cell seat 611 has a curved inner surface. That is, the cover frame 600 contacts a side of the bare cells 20 by the seat 611. Therefore, the cell seat 611 has a shape corresponding to the shape of the side 26 of the bare cells 20, as the side 26 of the bare cells 20 has a slightly rounded surface in this embodiment.

Further, the first frame 610 may further have a protection circuit module receiving portion 612 therein. The receiving portion 612 is a groove able to receive the protection circuit module 30 when it is mounted. That is, the protection circuit module 30 disposed at the side of the bare cells 20 interferes with contacting the side of the bare cells 20 to the seat 611 of the first frame 610. The bare cells 20 may be in contact with the first frame 610 without interference of the protection circuit module 30, by receiving it in the groove formed in the seat 611. Further, in the first frame 610, a protrusion 613 is formed at the opposite side corresponding to the protection circuit module receiving portion 612 and a terminal leading unit 614 is formed on the protrusion 613. The protrusion 613 and the terminal leading unit 614 are described below. Further, according to other embodiments of the invention, the position of the protection circuit module 30 in the bare cells 20 may be modified in various ways. Although the receiving portion 612 shown in the Figures is a rectangular groove, the shape is not limited thereto, unless it damages the protection circuit module.

The second frames 620a and 620b of the cover frame 600 respectively extend from both ends of the first frame 610, and respectively cover at least one cap assembly and at least one bottom of at least one of the bare cells 20. Bare cell fixing portions 621 are formed inside each one of the second frames 620a and 620b. The fixing portions 621 have shapes corresponding to the cap assembly and the bottom of the corresponding bare cells 20. The fixing portions 621 fix some of the cap assembly and the bottom of the bare cells 20 while reinforcing the combination of the cover frame 600 and the bare cells 20. Further, according to the invention, the shape and number of the fixing portions 621 may be modified in various ways.

FIG. 14 shows schematically the top of a connecting structure of the first frame 610a and the second frame 620a of the cover frame 600.

Referring to FIG. 14, the second frame 620a extends from the first frame 610, and is linearly connected by a bending portion 630. Therefore, the second frame 620a may rotate at 90° to the left and right from the first frame 610, fully at 180°. The second frame 620b may have similar structure in comparison with the second frame 620a. Therefore, the bare cells 20 are easily fixed by the second frames 620a and 620b, after being seated on the first frame 610. Further, a hinge (not shown) may be used to connect the first and second frames 610, 620a and 620b. That is, when the cover frame 600 is made of a material that is difficult to machine, such as wood, using a hinge for connection may be useful. As described above, since the second frames 620a and 620b can freely rotate, they can more easily fix the cap assembly and the bottom of some of the bare cells 20 inside the cover frame 600.

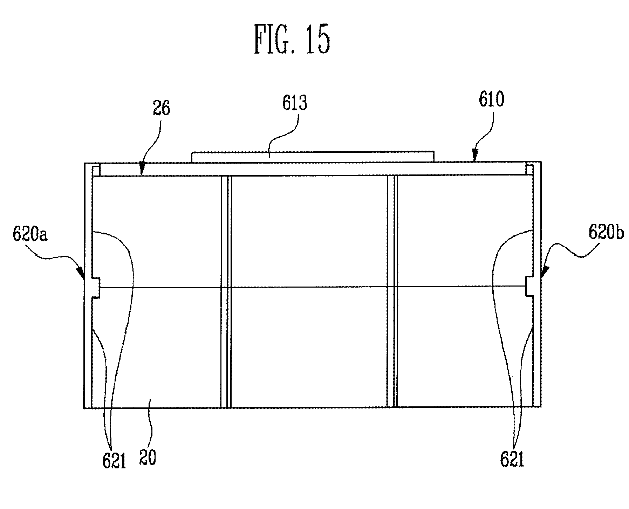

FIG. 15 shows schematically the top of an assembly of bare cells 20 and a cover frame 600.

Referring to FIG. 15, the side 26 of three of the bare cells 20 are in physical contact with the first frame 610, and the cap assembly and the bottom of some of the bare cells 20 are fixed by the second frames 620a and 620b. Therefore, the protection circuit module 30 disposed at the side of the bare cells 20 is received in the protection circuit module receiving portion 612 of the first frame 610, and the seat 611 of the first frame 610 is fitted on a side of the bare cells 20. Further, the fixing portions 621 of the second frames 620a and 620b fix the bare cells 20, covering the cap assembly and the bottom of some of the bare cells 20. Therefore, the bare cells 20 are firmly fixed to the cover frame 600, without being able to move inside the cover frame 600. Thus the battery pack 500 is mechanically and electrically stable.

The cover frame 600 may be manufactured by injection molding. For example, the cover frame 600 may be made of any one or more of glass fiber and glass fiber reinforced plastics (formed by adding plastic reinforcement to the glass fiber), but is not limited thereto. The cover frame 600 is the same as the cover frame 200 shown in FIGS. 1, 3, and 5, other than those described above, and the detailed description is not provided.

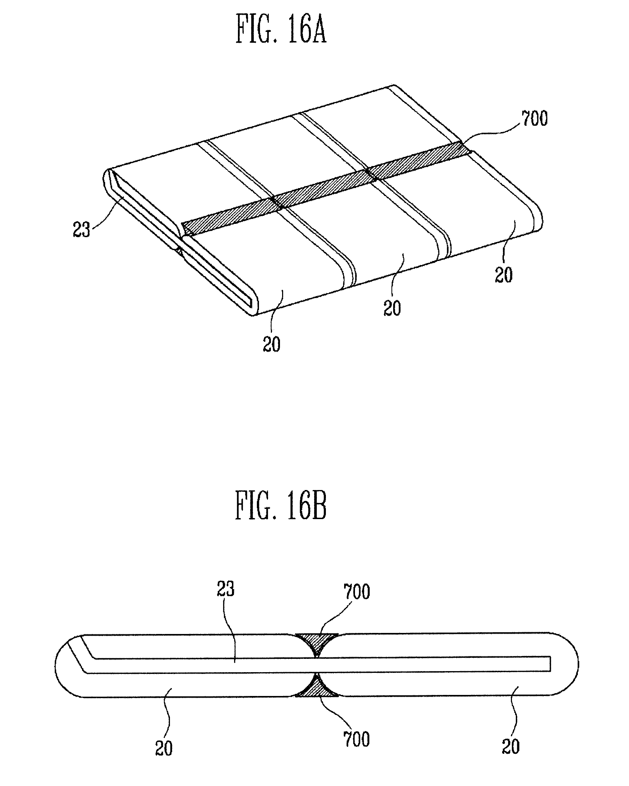

FIG. 16A is an oblique view showing the assembly of the bare cells 20 and a spacer 700, and FIG. 16B is side view of FIG. 16A.

Referring to FIGS. 16A and 16B, two series of the bare cells 20 are connected in parallel by an electrode lead 23 and the space between the bare cells 20 is filled with the spacer 700. The spacer 700 has two parts, respectively disposed on the top and the bottom of the bare cells 20 before the bare cells 20 are covered with the enclosure member 800 (see FIG. 11). The spacer 700 may be disposed before or after the bare cells 20 are received by the cover frame 600.

In general, the external shape of a battery pack 500 depends on the type of electronic device equipped with the battery pack 500. That is, one or more series of bare cells 20 are connected to each other in parallel, and then the protection circuit module 30 is mounted on the bare cells 20. Thereafter, the bare cells 20 including the protection circuit module 30 are made of polymer resin in a shape fitting to the electronic device.

The battery pack 500 constructed as this second embodiment includes the cover frame 600, which is a thin film covering only one side of the rectangular bare cells 20 therein, and the enclosure member 800 covering the portion of the bare cell 20 which is exposed by the cover frame 600 (see FIG. 11). Therefore, it is not necessary to fill the space between the bare cells in order to make the external shape of the battery pack 500 flat. However, in this second embodiment, the spacer 700 is used to fill the space. That is, the battery pack 500 may further include the spacer 700 in the space between the bare cells 20 and the enclosure member 800 such that the surface of the enclosure member 800 and the surface of the first frame 610 which are in physical contact with each other are parallel to each other.

The spacer 700 may be made of any one or more of polyethylene, polypropylene, polyethersulfone, polyphenyleneoxide, polyphenylene sulfide, polyimide, and polyethylene terephthalate. However, the spacer 700 has only to be an insulator and is not limited to the substances.

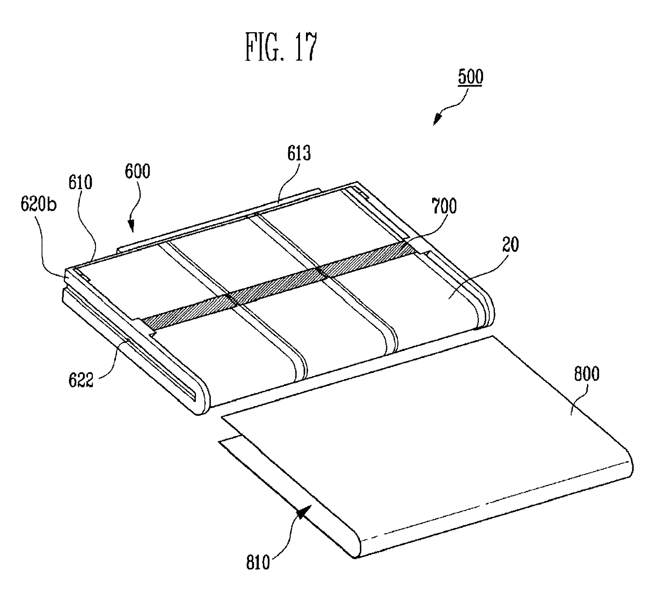

FIG. 17 is a schematic oblique view of the battery pack 500 according to this second embodiment.

Referring to FIG. 17, the bare cells 20 are not exposed to the outside by the combination of the cover frame 600 and the enclosure member 800. However, in other embodiments (not shown), the enclosure member 800 may cover only the bare cells 20, or alternatively, as shown, covers by its internal surface 810 the bare cells 20 and at least a part of the first frame 610 of the cover case 600. Meanwhile, when the enclosure member 800 covers a portion of the first frame 610, particularly the external surface 611 E of the seat 611 (see FIG. 11), the connection force between the bare cells 20 and the cover frame 600 is increased.

Further, referring to FIG. 17, the enclosure member 800 is made of an electrical insulating material in a thin film. The enclosure member 800 may be made of PC (polycarbonate), but is not limited thereto. Further, an adhesive layer (not shown) may be further provided on the internal side of the enclosure member 800. The combination force between the enclosure member 800 and the bare cells 20 is increased by this adhesive layer.

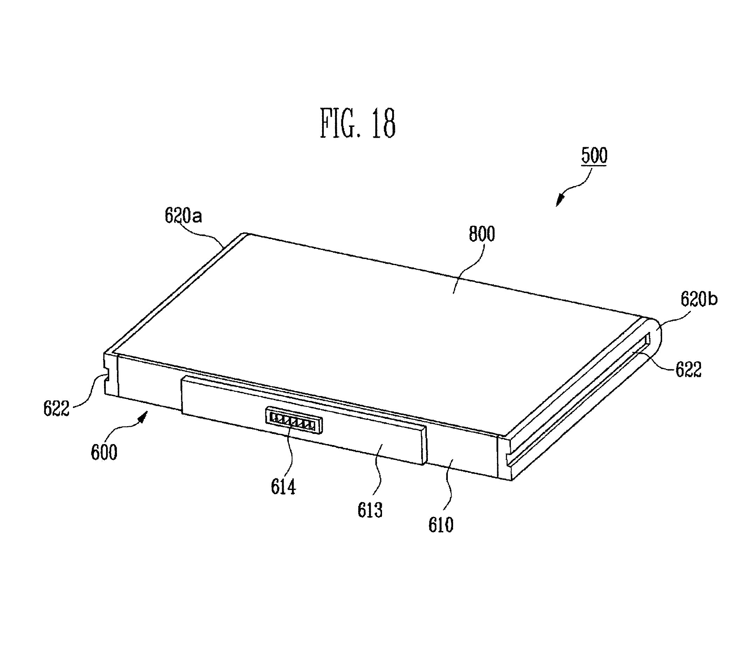

FIG. 18 is an oblique view of the battery pack 500 according to this second embodiment.

The battery pack 500 according to this second embodiment includes the cover frame 600 and the enclosure member 800 covering the bare cells 20 in the battery pack 500 and a portion of the cover frame 600.

In the cover frame 600, the protection circuit module receiving portion 612 (see FIG. 13) is formed inside the first frame 610 and the protrusion 613 is formed at the opposite side corresponding to the receiving portion 612, on the first frame 610. The protrusion 613 comprises a terminal leading unit 614.

The protrusion 613 allows to reduce the thickness of the first frame 610. That is, the protrusion 613 protrudes as much as the portion of the protection circuit module 30 that exceeds the thickness of the first frame 610. Therefore, the protection circuit module 30 is received in the space defined by the protrusion 613 and the protection circuit module receiving portion 612 (see FIG. 13) included in the first frame 610. As described above, the necessity of formation of the protrusion 613 depends on the thickness of the first frame 610 or the size of the protection circuit module 30.

The terminal leading unit 614 that exposes the external terminal of the protection circuit module 30 (see FIG. 18) is formed at the center of the protrusion 613. The external terminal (not shown) is electrically connected with an electrical terminal of an electronic device equipped with the battery pack 500 through the terminal leading unit 614. The terminal leading unit 614, as shown in the Figures, may protrude, but is not limited thereto. Further, the position may be modified in various ways in accordance with the electronic devices equipped with the battery pack 500 according to this second embodiment.

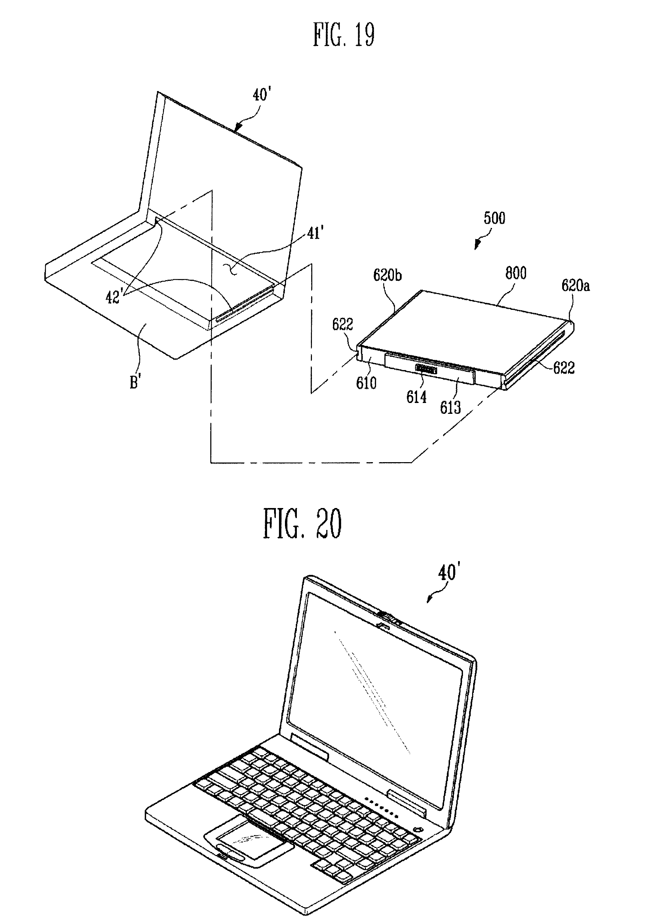

FIG. 19 is a view showing when the battery pack 500 according to the second embodiment of the present invention is mounted in the rear side of a second laptop computer 40'. Further, FIG. 20 is an oblique view of the laptop computer 40' equipped with the battery pack 500.

Referring to FIG. 19, a power supply seat 41', to which the battery pack 500 is mounted, is formed on the bottom B' of the laptop computer 40'. Fastening protrusions 42' are formed on two opposite sides inside the power supply seat 41'. Further, fastening structures 622 are formed on two opposite sides of the battery pack 500, that is, the outer sides of the second frames 620a and 620b. The fastening structures 622 are grooves corresponding to the fastening protrusions 42'. The grooves extend from the joint of the first frame 610 and the second frames 620a and 620b along the first frame 610. Further, the fastening structures 622 are positioned in correspondence with the fastening protrusions 42. Therefore, the fastening structures 622 fit to and slide on the fastening protrusions 42'. Therefore, the battery pack 500 is firmly fixed in place in the laptop computer 40'.

As shown in FIG. 20, the battery pack 500 is mounted in the laptop computer 40' by the fastening structures 622 of the battery pack 500, and the terminal leading unit 614 of the battery pack 500 is connected with the terminal in the seat 41' for the battery pack 500 in the laptop computer 40'. Therefore, it is possible to operate the laptop computer 40' by supplying it with the battery pack 500.

Recently, the weight and size of electronic devices, such as laptop computers, have been gradually reduced. It is required to manufacture light and slim battery packs for the electronic device, in order to satisfy the demand. Further, the battery packs require to have a flat surface, because they are usually mounted in the bottom of the laptop computers. Advantageously, a battery pack according to the present invention answers to these need, because the case is not to be made of polymer resin. Therefore, the electronic devices equipped with a battery pack according to the present invention can be kept light and slim.

While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and equivalents thereof.

## Claims

1. A battery pack (100, 500) comprising;
a plurality of bare cells (10,20), preferably cylindrical bare cells (10) or rectangular bare cells (20), each one of the bare cells having a cap assembly (1, 21), a bottom (14, 24) positioned opposite to the cap assembly, and a side (15, 26) connecting the cap assembly and the bottom;
a protection circuit module (30) mounted on the bare cells;
a cover frame (200, 600) covering the bare cells; and
an enclosure member (400, 800) covering the bare cells.

2. The battery pack (100, 500) as claimed in claim 1, wherein the cover frame (200, 600) is composed of a first frame (210, 610) and two second frames (220a,220b ; 620a,620b) and the two second frames of the cover frame respectively extend from both ends of the first frame.

3. The battery pack as claimed in claim 2, wherein the first frame (210, 610) covers one side of at least one of the bare cells (10, 20) and one of the second frames (210a,210b ; 610a,610b) covers the cap assembly of at least one of the bare cells and the other one of the second frames covers the bottom of at least another one of the bare cells.

4. The battery pack as claimed in any one of claims 2 and 3, wherein the first frame (210, 610) has a seat (211, 611) having a shape corresponding to a shape of at least one side of the bare cells.

5. The battery pack as claimed in any one of claims 2 to 4, wherein the first frame (210, 610) comprises a receiving portion (212, 612) for receiving the protection circuit module.

6. The battery pack (100, 500) as claimed in any one of claims 2 to 5, wherein the second frames (210a,210b ; 610a,610b) have fixing portions (221 ; 621) having shapes corresponding respectively to at least one cap assembly of at least one of the bare cells and to at least a bottom of at least another one of the bare cells.

7. The battery pack (100, 500) as claimed in any one of claims 2 to 6, wherein the second frames (210a,210b ; 610a,610b) are linearly connected and extended from to two end of the first frame (210, 610), and preferably the second frames (210a,210b ; 610a,610b) rotate at ±90° with respect to the first frame (210, 610).

8. The battery pack (100, 500) as claimed in any one of claims 1 to 7, wherein the enclosure member (400, 800) further comprises an adhesive layer disposed on a surface in contact with the bare cells.

9. The battery pack (100, 500) as claimed in any one of claims 1 to 8, wherein the enclosure member (400, 800) covers the bare cells exposed by the cover frame and potentially a portion of the cover frame physically contacting the bare cells.

10. The battery pack (100, 500) as claimed in any one of claims 1 to 9, further comprising a spacer (300, 700) disposed in a space between the bare cells (10, 20) and the enclosure member (400, 800), preferably such that the surface of the enclosure member (400, 800) and the surface of the first frame (210, 610) which are in physical contact one with each other are parallel one to the other.

11. The battery pack (100, 500) as claimed in any one of claims 1 to 10, wherein the cover frame (200, 600) is made of any element chosen from the group consisting of thermoplastic resins, glass fiber and glass fiber reinforced plastics, the enclosure member (400, 800) is made of polycarbonate and if present the spacer (300, 700) is an organic or an inorganic insulator, preferably made of any one or more of polyethylene, polypropylene, polyethersulfone, polyphenyleneoxide, polyphenylene sulfide, polyimide, and polyethylene terephthalate.

12. The battery pack (100, 500) as claimed in any one of claims 1 to 11, wherein the cover frame (200, 600) has a protrusion (213, 613) extruding towards outside of the battery pack (100, 500), and the protrusion(213, 613) corresponds preferably to a location of the protection circuit module (30).

13. The battery pack (100, 500) as claimed in claim 12, wherein the protection circuit module (30) has an external terminal, said external terminal being electrically connected outside of the battery pack (100, 500) through a terminal leading unit (214, 614) disposed on the protrusion (213, 613).

14. The battery pack (100, 500) as claimed in any one of claims 1 to 13, wherein fastening structures (222, 622) are formed at two opposite sides of the cover frame (200, 600).

15. Thin electronic device (40, 40'), preferably laptop computer (40, 40'), said device (40, 40') comprising the battery pack (100, 500) as claimed in any one of claims 1 to 14.
